# EUROPEAN PATENT APPLICATION

(11) **EP 4 650 404 A1**
(43) Date of publication of application: **19.11.2025**
(21) Application number: 24741542.5
(22) Date of filing: 10.01.2024
(51) Int. Cl.: C09D 11/30, B41J 2/01, B41J 2/015, B41M 5/00

(54) **EDIBLE INKJET INK PRINTING METHOD, TABLET PRODUCTION METHOD, EJECTION APPARATUS, AND DRIVE WAVEFORM GENERATION DEVICE**

(30) Priority: 12.01.2023 JP 2023002893
(71) Applicant: Toppan Holdings Inc., Tokyo 110-0016 (JP)
(72) Inventor: KOSEKI, Seiya, Tokyo 110-0016 (JP); HASHIMOTO, Risa, Tokyo 110-0016 (JP); MIYAZAWA, Yasuhisa, Tokyo 110-0016 (JP); HOSHINO, Yuichi, Tokyo 110-0016 (JP); SAITO, Masatoshi, Tokyo 110-0016 (JP); UCHIYAMA, Hiromitsu, Tokyo 110-0016 (JP)
(74) Representative: TBK
(86) International application number: PCT/JP2024/000317
(87) International publication number: WO 2024/150770

(57) **Abstract**

The present invention provides an edible inkjet ink printing method and the like that each make it possible to suppress deterioration in initial ejection performance and in intermittent resumability, even in a case where the added amount of alcohol solvent in edible inkjet ink is increased to improve drying properties.

An inkjet ink printing method according to the present embodiment is an inkjet ink printing method including printing a print image with inkjet ink by using a device configured to eject the inkjet ink, the inkjet ink containing alcohol within a range of 30% or more and 60% or less, wherein the device configured to eject the inkjet ink includes an ink ejection head configured to eject the inkjet ink and a drive waveform generator configured to generate a drive waveform to be applied to a pressure-generating element of the ink ejection head, and the drive waveform is a waveform that decreases from a reference potential VO to a potential V2 and then increases to a potential V3 higher than the reference potential V0, and returns to the reference potential VO again during ejection of the inkjet ink.

## Description

### [Technical Field]

The present invention relates to an edible inkjet ink printing method, a method for manufacturing a tablet, an ejection device, and a drive waveform generator.

### [Background Art]

Inks for inkjet printing (hereinafter, also referred to simply as "inkjet inks") include edible inks. A technique related to edible inkjet inks is described, for example, in PTL 1.

Some edible inkjet inks may contain, for example, alcohol solvents as drying solvent media that improve drying properties of the inks. In addition, some edible inkjet inks may contain, for example, vegetable carbon black or the like as black pigment and tar-based colorant or the like as food dye.

### [Citation List]

### [Patent Literature]

PTL 1: JP 2006-169301 A

### [Summary of Invention]

### [Technical Problem]

Some inkjet inks including edible colorants (hereinafter, also referred to simply as "inkjet inks") are sometimes required to have a function of drying quickly after printing, that is, drying properties. Examples of methods for improving this performance include increasing the amount of an alcohol solvent having fast-drying properties added to the inkjet ink as a drying solvent medium. However, this method promotes drying of the nozzle liquid surface, which may deteriorate initial ejection performance and intermittent resumability (hereinafter, also referred to as printing stability). In particular, inkjet ink having an alcohol solvent content (concentration) of 30 mass% or more of the total mass of the ink tends to have more prominently deteriorated initial ejection performance and intermittent resumability described above. Here, the term "initial ejection performance" refers to the ability to eject ink immediately after the start of printing without the occurrence of non-printed areas due to non-ejection of ink. In addition, "intermittent resumability" refers to the ability to eject ink without increasing non-printed areas from the initial ejection when an inkjet head is used for printing, after the ink is left in the inkjet head for a specified period of time without flushing. It is to be noted that intermittent resumability as described above may also be referred to as printing resumability or printing intermittent resumability.

In contrast, printing using inkjet ink having a smaller added amount of alcohol solvent increases the intermittent resumability described above, but tends to decrease, for example, the drying properties of the ink. Therefore, when inkjet ink having a smaller added amount of alcohol solvent is used to print characters or the like, for example, on a tablet such as a film-coated tablet (FC tablet) or a sugar-coated tablet having low drying properties, the low drying properties of the ink may cause transfer of the ink to printing machine parts or other tablets.

The present invention has been devised in view of the circumstances described above, and aims to provide an edible inkjet ink printing method, a tablet including a print image printed by using the printing method, an ink ejection device that is used for the edible inkjet ink printing method, and a drive waveform generator that is used for the ink ejection device which each make it possible to suppress deterioration in initial ejection performance and in intermittent resumability, even in a case where the added amount of alcohol solvent in edible inkjet ink is increased to improve the drying properties.

### [Solution to Problem]

An edible inkjet ink printing method according to an aspect of the present invention is an edible inkjet ink printing method including printing a print image with edible inkjet ink by using a device configured to eject the edible inkjet ink, the edible inkjet ink containing alcohol within a range of 30% or more and 60% or less, wherein the device configured to eject the edible inkjet ink includes an ink ejection head configured to eject the edible inkjet ink and a drive waveform generator configured to generate a drive waveform to be applied to a pressure-generating element of the ink ejection head, and the drive waveform during ejection of the inkjet ink is a waveform that decreases from a reference potential V0 to a potential V2 lower than the reference potential V0 and then increases to a potential V3 higher than the reference potential V0, and returns to the reference potential V0 again.

Further, a method for manufacturing a tablet according to an aspect of the present invention is a method for manufacturing a tablet including a print image printed with edible inkjet ink by using a device configured to eject the edible inkjet ink, the edible inkjet ink containing alcohol within a range of 30% or more and 60% or less, wherein the device configured to eject the edible inkjet ink includes an ink ejection head configured to eject the edible inkjet ink and a drive waveform generator configured to generate a drive waveform to be applied to a pressure-generating element of the ink ejection head, and the drive waveform during ejection of the inkjet ink is a waveform that decreases from a reference potential V0 to a potential V2 lower than the reference potential V0 and then increases to a potential V3 higher than the reference potential V0, and returns to the reference potential V0 again.

Further, an ejection device according to an aspect of the present invention is an ejection device configured to eject edible inkjet ink, the edible inkjet ink containing alcohol within a range of 30% or more and 60% or less, the ejection device including: an ink ejection head configured to eject the edible inkjet ink; and a drive waveform generator configured to generate a drive waveform to be applied to a pressure-generating element of the ink ejection head, wherein the drive waveform during ejection of the inkjet ink is a waveform that decreases from a reference potential V0 to a potential V2 lower than the reference potential V0 and then increases to a potential V3 higher than the reference potential V0, and returns to the reference potential V0 again.

Further, a drive waveform generator according to an aspect of the present invention is a drive waveform generator configured to generate a drive waveform to be applied to a pressure-generating element of a liquid ejection head configured to eject edible inkjet ink, the edible inkjet ink containing alcohol within a range of 30% or more and 60% or less, wherein the drive waveform during ejection of the inkjet ink is a waveform that decreases from a reference potential V0 to a potential V2 lower than the reference potential V0 and then increases to a potential V3 higher than the reference potential V0, and returns to the reference potential V0 again.

Furthermore, an edible inkjet ink printing method according to an aspect of the present invention is an edible inkjet ink printing method including printing a print image with edible inkjet ink by using a device configured to eject the edible inkjet ink, the edible inkjet ink containing alcohol within a range of 30% or more and 60% or less, wherein the device configured to eject the edible inkjet ink includes an ink ejection head configured to eject the edible inkjet ink and a drive waveform generator configured to generate a drive waveform to be applied to a pressure-generating element of the ink ejection head, the drive waveform consecutively includes a first waveform and a second waveform in chronological order, the first waveform being applied while the inkjet ink is not being ejected, the second waveform being applied while the inkjet ink is being ejected, the first waveform is a waveform that decreases from a reference potential V0 to a potential V1 lower than the reference potential V0 and then returns to the reference potential V0 again, the second waveform is a waveform that decreases from the reference potential V0 to a potential V2 lower than the reference potential V0 and then increases to a potential V3 higher than the reference potential V0, and returns to the reference potential V0 again, and the potential V2 is a potential lower than the potential V1.

Furthermore, a method for manufacturing a tablet according to an aspect of the present invention is a method for manufacturing a tablet including a print image printed with edible inkjet ink by using a device configured to eject the edible inkjet ink, the edible inkjet ink containing alcohol within a range of 30% or more and 60% or less, wherein the device configured to eject the edible inkjet ink includes an ink ejection head configured to eject the edible inkjet ink and a drive waveform generator configured to generate a drive waveform to be applied to a pressure-generating element of the ink ejection head, the drive waveform consecutively includes a first waveform and a second waveform in chronological order, the first waveform being applied while the inkjet ink is not being ejected, the second waveform being applied while the inkjet ink is being ejected, the first waveform is a waveform that decreases from a reference potential V0 to a potential V1 lower than the reference potential V0 and then returns to the reference potential V0 again, the second waveform is a waveform that decreases from the reference potential V0 to a potential V2 lower than the reference potential V0 and then increases to a potential V3 higher than the reference potential V0, and returns to the reference potential V0 again, and the potential V2 is a potential lower than the potential V1.

Furthermore, an ejection device according to an aspect of the present invention is an ejection device configured to eject edible inkjet ink, the edible inkjet ink containing alcohol within a range of 30% or more and 60% or less, the ejection device including: an ink ejection head configured to eject the edible inkjet ink; and a drive waveform generator configured to generate a drive waveform to be applied to a pressure-generating element of the ink ejection head, wherein the drive waveform consecutively includes a first waveform and a second waveform in chronological order, the first waveform being applied while the inkjet ink is not being ejected, the second waveform being applied while the inkjet ink is being ejected, the first waveform is a waveform that decreases from a reference potential V0 to a potential V1 lower than the reference potential V0 and then returns to the reference potential V0 again, the second waveform is a waveform that decreases from the reference potential V0 to a potential V2 lower than the reference potential V0 and then increases to a potential V3 higher than the reference potential V0, and returns to the reference potential V0 again, and the potential V2 is a potential lower than the potential V1.

Furthermore, a drive waveform generator according to an aspect of the present invention is a drive waveform generator configured to generate a drive waveform to be applied to a pressure-generating element of a liquid ejection head configured to eject edible inkjet ink, the edible inkjet ink containing alcohol within a range of 30% or more and 60% or less, wherein the drive waveform consecutively includes a first waveform and a second waveform in chronological order, the first waveform being applied while the inkjet ink is not being ejected, the second waveform being applied while the inkjet ink is being ejected, the first waveform is a waveform that decreases from a reference potential V0 to a potential V1 lower than the reference potential V0 and then returns to the reference potential V0 again, the second waveform is a waveform that decreases from the reference potential V0 to a potential V2 lower than the reference potential V0 and then increases to a potential V3 higher than the reference potential V0, and returns to the reference potential V0 again, and the potential V2 is a potential lower than the potential V1.

### [Advantageous Effects of Invention]

An edible inkjet ink printing method according to an aspect of the present invention, an ejection device that is used for the printing method, and a drive waveform generator that is used for the ejection device each make it possible to suppress deterioration in initial ejection performance and in intermittent resumability, even in a case where the added amount of alcohol solvent in edible inkjet ink is increased to improve the drying properties.

In addition, a method for manufacturing a tablet according to an aspect of the present invention makes it possible to suppress deterioration in initial ejection performance and in intermittent resumability, even in a case where the added amount of alcohol solvent in edible inkjet ink is increased to improve the drying properties.

### [Brief Description of Drawings]

Fig. 1 is a schematic cross-sectional view of a mechanical structure of a print head according to the present embodiment.
Fig. 2 is a schematic diagram schematically illustrating a drive signal according to the present embodiment.
Fig. 3 is a schematic diagram schematically illustrating behavior of a meniscus observed when a first waveform according to the present embodiment is applied alone to a piezoelectric transducer.
Fig. 4 is a schematic diagram schematically illustrating behavior of the meniscus observed when a second waveform according to the present embodiment is applied alone to the piezoelectric transducer.
Fig. 5 includes a plan view and a cross-sectional view of a first configuration example of a medical tablet according to the present embodiment.
Fig. 6 includes a plan view and a cross-sectional view of a second configuration example of a medical tablet according to the present embodiment.
Fig. 7 is a schematic diagram schematically illustrating a drive waveform according to the present example.

### [Description of Embodiments]

Edible inkjet ink according to an embodiment of the present invention relates to edible inkjet ink that may be used, for example, to print characters, images, or the like on a surface of a medical tablet by inkjet printing. In the following description, a composition of the edible inkjet ink according to an embodiment of the present invention and a configuration of a tablet including a portion printed with the inkjet ink will be described in detail. Further, an edible inkjet ink printing method according to an embodiment of the present invention, an ejection device that is used for the printing method, and a drive waveform generator that is used for the ejection device will be described in detail.

### [Composition of Inkjet Ink]

An inkjet ink according to the present embodiment at least contains water, alcohol solvent, and edible colorant.

The alcohol solvent according to the present embodiment may be of any type as long as it has fast-drying properties, but may preferably include, for example, at least one of ethanol, isopropyl alcohol (IPA), and normal propyl alcohol (NPA).

In addition, the alcohol solvent content (concentration) is preferably within a range of 30 mass% or more and 60 mass% or less of the total mass of the inkjet ink, more preferably within a range of 30 mass% or more and 50 mass% or less, and still more preferably within a range of 30 mass% or more and 45 mass% or less. In many inkjet inks according to the conventional technology, the alcohol solvent content is less than 30 mass% of the total mass of the inkjet ink from the viewpoint of preventing the ink from drying excessively. Therefore, the inkjet ink according to the present embodiment is an ink having a higher alcohol solvent content than the inkjet ink according to the conventional technology.

In addition, the inkjet ink according to the present embodiment preferably has a viscosity of 5.0 mPa·s or less at an ink temperature of 25°C, more preferably 4.5 mPa·s or less, and still more preferably 4.0 mPa·s or less. The lower limit of the viscosity of the inkjet ink according to the present embodiment at an ink temperature of 25°C is not particularly limited, but it is easier to handle the ink if the viscosity is 2.3 mPa·s or more.

In addition, the inkjet ink according to the present embodiment preferably has a surface tension within a range of 23 mN/m or more and 34 mN/m or less at an ink temperature of 25°C, and more preferably within a range of 24 mN/m or more and 34 mN/m or less.

Details of the respective components included in the inkjet ink according to the present embodiment will be described below.

### (Edible Colorant)

Examples of the edible colorant contained in the inkjet ink according to the present embodiment include edible pigments and edible dyes. The edible pigment according to the present embodiment is not particularly limited, and may be, for example, vegetable carbon black such as medical charcoal, bincho charcoal or bamboo charcoal, orally ingestible carbon, or industrial petroleum-based carbon black. Of these carbons, orally ingestible carbon is particularly preferable. In a case where orally ingestible carbon is used, it is possible to use the inkjet ink according to the present embodiment for direct printing onto tablet surfaces, direct printing onto food products, and for packaging in direct contact with pharmaceutical products and food products.

In addition, the edible dye according to the present embodiment is not particularly limited, and may be, for example, a publicly known synthetic food colorant or natural food colorant.

Examples of the synthetic food colorants include tar-based colorants, natural colorant derivatives, natural synthetic colorants, and the like. Examples of tar-based colorants include Food Red No. 2, Food Red No. 3, Food Red No. 40, Food Red No. 102, Food Red No. 104, Food Red No. 105, Food Red No. 106, Food Yellow No. 4, Food Yellow No. 5, Food Blue No. 1, Food Blue No. 2, Food Green No. 3, Food Red No. 2 Aluminum Lake, Food Red No. 3 Aluminum Lake, Food Red No. 40 Aluminum Lake, Food Yellow No. 4 Aluminum Lake, Food Yellow No. 5 Aluminum Lake, Food Blue No. 1 Aluminum Lake, Food Blue No. 2 Aluminum Lake, and the like. Examples of natural colorant derivatives include norbixin potassium and the like. Examples of natural synthetic colorants include β-carotene, riboflavin, and the like.

In addition, examples of the natural food colorants include anthocyanin-based colorants, carotenoid-based colorants, quinone-based colorants, flavonoid-based colorants, betaine-based colorants, Monascus colorants, and other colorants originating from natural products. Examples of the anthocyanin-based colorants include red radish colorant, red cabbage colorant, red rice colorant, elderberry colorant, cowberry colorant, gooseberry colorant, cranberry colorant, salmon berry colorant, perilla colorant, sim blueberry colorant, strawberry colorant, dark sweet cherry colorant, cherry colorant, hibiscus colorant, huckleberry colorant, grape juice colorant, grape skin colorant, black currant colorant, blackberry colorant, blueberry colorant, plum colorant, whortleberry colorant, boysenberry colorant, mulberry colorant, purple yam colorant, purple corn colorant, Chinese purple yam colorant, raspberry colorant, red currant colorant, loganberry colorant, and other anthocyanin-based colorants. Examples of the carotenoid-based colorants include annatto colorant, gardenia yellow colorant, and other carotenoid-based colorants. Examples of the quinone-based colorants include cochineal colorant, Lithospermi radix colorant, lac colorant, and other quinone-based colorants. Examples of the flavonoid-based colorants include safflower yellow colorant, kaoliang colorant, onion colorant, and other flavonoid-based colorants. Examples of the betaine-based colorants include beet red colorant. Examples of the Monascus colorants include Monascus red colorant and Monascus yellow colorant. Examples of the other colorants originating from natural products include turmeric colorant, clerodendrum trichotomum colorant, gardenia red colorant, spirulina blue colorant, and the like.

The edible colorant content (concentration) may preferably be, for example, within a range of 0.5 mass% or more and 6 mass% or less of the total mass of the inkjet ink, and more preferably within a range of 1 mass% or more and 5 mass% or less. Such a configuration makes it possible to impart high printing stability to a print image in addition to favorable visual recognizability.

In contrast, when the edible colorant content is less than 0.5 mass%, the overall printed colors become paler and visual recognizability of the print image tends to decrease. In addition, when the content exceeds 6 mass%, the edible colorant in the inkjet ink is deposited or precipitated as a solid due to the deteriorated solution stability of the edible colorant. This causes the nozzle of an inkjet head to be clogged during printing and the intermittent resumability tends to decrease.

### (Solvent)

The inkjet ink according to the present embodiment contains a solvent that dissolves or disperses the edible colorant described above. The solvent contains water and an alcohol solvent serving as a drying solvent (drying solvent medium). The following description will be given of the water and the drying solvent.

The water contained in the inkjet ink according to the present embodiment may be, for example, purified water. The proportion of the water contained in the inkjet ink according to the present embodiment may preferably be, for example, 30 mass% or more of the total mass of the inkjet ink.

The drying solvent contained in the inkjet ink according to the present embodiment is an alcohol solvent, and the alcohol solvent may include, for example, at least one of ethanol, isopropyl alcohol (IPA), and normal propyl alcohol (NPA). The concentration of this alcohol solvent is 60 mass% or less of the total mass of the inkjet ink. When the concentration of the alcohol solvent exceeds 60 mass% of the total mass of the inkjet ink, the ink has excessive drying properties and the printing stability tends to decrease. In addition, the lower limit of the concentration of the alcohol solvent is 30 mass% or more of the total mass of the inkjet ink. As long as the lower limit is within this numerical range, it is possible to impart excellent drying properties to the inkjet ink.

### (Dispersant)

The inkjet ink according to the present embodiment may contain a dispersant in addition to the edible colorant and the solvent described above. The dispersant that can be added to the inkjet ink according to the present embodiment may be any dispersant as long as it allows the edible colorant (edible pigment such as carbon in particular) described above to have higher dispersibility and is edible, and for example, a sucrose fatty acid ester having an HLB (Hydrophilic-Lipophilic Balance) value within a range of 11 or more and 20 or less may be used. The sucrose fatty acid ester content is preferably within a range of 60 mass% or more and 180 mass% or less of the edible colorant described above. When the content of the sucrose fatty acid ester which is the dispersant is less than 60 mass% of the edible colorant described above, the dispersion stability of the edible colorant tends to decrease. In addition, when the content of the sucrose fatty acid ester which is the dispersant exceeds 180 mass% of the edible colorant described above, the drying properties tend to decrease.

In addition, the HLB value of the sucrose fatty acid ester contained in the inkjet ink according to the present embodiment is preferably within a range of 11 or more and 20 or less. Such a configuration makes it possible to impart sufficient drying properties to the inkjet ink and suppress deterioration in printing stability. When the HLB value of the sucrose fatty acid ester is less than 11, the printing stability tends to decrease. In addition, the upper limit of the HLB value of the sucrose fatty acid ester is 20.

### (Humectant)

The inkjet ink according to the present embodiment may contain a humectant in addition to the edible colorant, the solvent, and the dispersant described above. The humectant content may be within a range of 0.001 mass% or more and 10 mass% or less of the total mass of the inkjet ink. Such a configuration makes it possible to impart sufficient drying properties to the inkjet ink during use and further suppress deterioration in printing stability. When the humectant content is less than 0.001 mass% of the total mass of the inkjet ink, the printing stability tends to decrease. In addition, when the humectant content exceeds 10 mass% of the total mass of the inkjet ink, it tends to be difficult to impart sufficient drying properties to the inkjet ink.

The humectant content in the inkjet ink according to the present embodiment is more preferably 3 mass% or less of the total mass of the inkjet ink. Such a configuration makes it possible to impart sufficient drying properties to the inkjet ink and further suppress deterioration in printing stability.

The humectant that may be added to the inkjet ink according to the present embodiment is not particularly limited as long as it is typically added to inkjet ink as a humectant. Further, the humectant according to the present embodiment is more effective if it has a high boiling point. Here, the "high boiling point" means, for example, 140°C or higher.

Specific examples of the humectant according to the present embodiment include ethylene glycol, propylene glycol, diethylene glycol, triethylene glycol, pentamethylene glycol, trimethylene glycol, 2-butene-1,4-diol, 2-ethyl-1,3-hexanediol, 2-methyl-2,4-pentanediol, tripropylene glycol, polyethylene glycol having a number average molecular weight of 2,000 or less, 1,3-propylene glycol, isopropylene glycol, isobutylene glycol, glycerin, mesoerythritol, pentaerythritol, 2-pyrrolidone, N-methyl-2-pyrrolidone, N-ethyl-2-pyrrolidone, and the like. Of these humectants, a humectant including at least one of propylene glycol and glycerin is particularly preferable. Such a configuration makes it possible to impart sufficient drying properties to the inkjet ink and further suppress deterioration in printing stability.

The humectants according to the present embodiment may be used alone, for example, or in combination of two or more.

### (Binder)

The inkjet ink according to the present embodiment may contain a binder (fixing agent) in addition to the edible colorant, the solvent, the dispersant, and the humectant described above. The binder that may be added to the inkjet ink according to the present embodiment is not particularly limited as long as it is typically added to inkjet ink as a binder, and may contain, for example, polysaccharides. In addition, the polysaccharide contained in the binder according to the present embodiment more preferably has a weight-average molecular weight within a range of 1,000 or more and 10,000 or less. Such a configuration makes it possible to impart sufficient drying properties to the inkjet ink and further suppress deterioration in printing stability. When the weight-average molecular weight of the polysaccharide serving as the binder is less than 1,000, it tends to be difficult to impart sufficient drying properties to the inkjet ink. In addition, when the weight-average molecular weight of the polysaccharide serving as the binder exceeds 10,000, the printing stability tends to decrease.

In addition, the polysaccharide content according to the present embodiment is preferably 0.01 mass% or more and 10 mass% or less of the total mass of the inkjet ink. When the binder content is within this range, the ink has viscosity to such a degree that allows inkjet printing to be favorably performed.

Examples of the polysaccharide according to the present embodiment include polysaccharides such as maltodextrin, erythritol, PVP (polyvinylpyrrolidone), dextran, polydextrose, trehalose, starch substances such as corn and wheat, cellulosic substances such as carboxymethyl cellulose and hydroxymethyl cellulose, sodium alginate, gum arabic, locust bean gum, trant gum, guar gum, and tamarind seeds.

In addition, for example, a disaccharide having a solubility of 39 g or less relative to 100 ml of water at 20°C may be contained as the binder according to the present embodiment. Specifically, the disaccharide may be lactose, cellobiose, or reduced isomaltulose. The solubility of lactose, the solubility of cellobiose, and the solubility of reduced isomaltulose relative to 100 ml of water at 20°C are 16 g, 14 g, and 38 g, respectively. The addition of the disaccharide described above to the inkjet ink described above allows for fixation onto a surface of a print target object (e.g., tablet) including edible colorant (edible dye in particular). This allows the inkjet ink containing the disaccharide described above to sufficiently suppress photo-fading of a print image, and increase the light fastness. In addition, the disaccharide (the lactose, the cellobiose, or the reduced isomaltulose) used as a binder in the present embodiment also has a function of suppressing decomposition (photodegradation) of the inkjet ink due to light irradiation. This makes it possible to suppress even photo-fading itself from occurring.

The formulation ratio of the disaccharide in the inkjet ink according to the present embodiment, that is, the total disaccharide (lactose, cellobiose, or reduced isomaltulose) content, is preferably within a range of 1 mass% or more and 20 mass% or less of the total mass of the inkjet ink. Such a configuration makes it possible to attain an effect of fixing the inkjet ink by the disaccharide more reliably and increase the light fastness of the inkjet ink. In addition, it is possible to impart high printing stability to the inkjet ink according to the present embodiment.

In contrast, when the formulation ratio of the disaccharide is less than 1 mass% of the total mass of the inkjet ink, the effect of fixing the inkjet ink may be reduced. In addition, when the formulation ratio of the disaccharide exceeds 20 mass% of the total mass of the inkjet ink, the ink viscosity may increase and a fixing agent in the inkjet ink may be deposited or precipitated as a solid due to the deteriorated solution stability of the disaccharide. This causes the nozzle of the inkjet head to be clogged during printing and may decrease the printing stability.

In general, a saccharide has properties such that the saccharide is difficult to dissolve in alcohols. Therefore, the solvent includes propylene glycol and ethanol in the present embodiment to decrease the solubility of the disaccharide used as a binder relative to the solvent. Thus, when the solvent containing the alcohols (propylene glycol and ethanol) is added to the inkjet ink of the present embodiment in addition to the disaccharide serving as a binder, it is possible to reliably attain the effect of fixing the inkjet ink and keep the edible colorant (edible dye in particular) contained in the inkjet ink on a surface of a print target object (e.g., tablet) at a high concentration. This allows the inkjet ink to sufficiently suppress photo-fading of a print image and increase the light fastness thereof.

Moreover, propylene glycol functions as a humectant as described above and makes it possible to prevent the ink from drying at the inkjet nozzle and to impart sufficient printing stability to the inkjet ink. Further, ethanol has high volatility and therefore makes it possible to increase the transfer resistance (drying properties) of the inkjet ink.

### (Leveling Agent)

The inkjet ink according to the present embodiment may contain a leveling agent in addition to the edible colorant (edible dye in particular), the solvent, or the internal-sizing resin described above. The levelling agent that can be added to the inkjet ink according to the present embodiment may be an edible and water-soluble surfactant. Examples of the levelling agent include polyglycerin fatty acid ester (e.g., decaglycerin distearate Q-182S or decaglycerin monolaurate Q-12S manufactured by Taiyo Kagaku Corporation), sorbitan fatty acid ester (e.g., NIKKOL SL-10 manufactured by Nikko Chemicals Co., Ltd.), sucrose fatty acid ester (e.g., DK Ester F-110 manufactured by DKS Co. Ltd.), polysorbate (Emazole S-120 series manufactured by Kao Corporation), and the like.

### [Printing Method]

A printing means of the inkjet ink according to the present embodiment is not particularly limited, and it is possible to perform printing by using an inkjet device such as a commercially available inkjet printer. Therefore, the inkjet ink according to the present embodiment has a wide range of application and is very useful. For example, the inkjet ink according to the present embodiment may be used for printing with drop-on-demand inkjet devices that include a piezoelectric element (piezoelectric ceramic) as an actuator or may also be used for printing with other types of inkjet devices.

Examples of the drop-on-demand inkjet device include a thermal-inkjet type device that ejects inkjet ink by using water vapor pressure generated by instantaneously heating a minute heating element to a high temperature (200°C to 300°C), an electrostatic-type device that ejects inkjet ink by electrostatically vibrating an actuator, an ultrasonic-type device that uses an ultrasonic cavitation phenomenon, and the like. In addition, if the inkjet ink according to the present embodiment has charging performance, it is also possible to use a continuous-injection-type (continuous-type) device.

The following description will be given of an example of an inkjet device used to eject the inkjet ink according to the present embodiment and print characters on the surface of a print target object (e.g., tablet).

The inkjet device that is a device configured to eject the inkjet ink according to the present embodiment includes at least a print head (ink ejection head) that ejects the inkjet ink and a drive waveform generator (drive signal generating circuit) that generates a drive waveform (drive signal) to be applied to a pressure-generating element (piezoelectric transducer) of the print head.

### (Mechanical Configuration of Print Head)

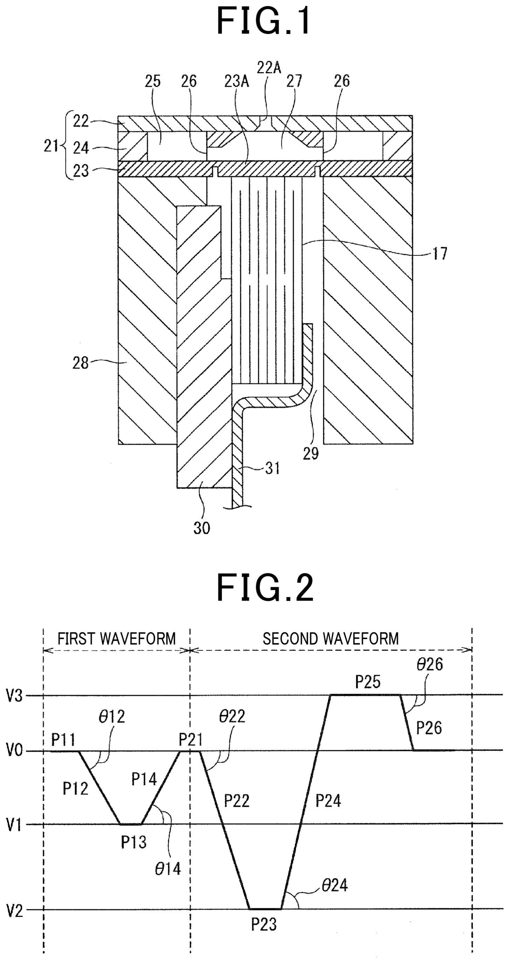

Fig. 1 illustrates an example of a mechanical structure of a print head 10. A substrate unit 21 includes a flow channel formation plate 24 sandwiched between a nozzle plate 22 having a nozzle hole 22A and a vibrating plate 23 having an island section 23A. In the flow channel formation plate 24, an ink chamber 25, an ink supply port 26, and a pressure generation chamber 27 are formed.

An accommodation chamber 29 is formed in a base 28 and a piezoelectric transducer 17 is mounted in the accommodation chamber 29. The piezoelectric transducer 17 is fixed through a fixation substrate 30 such that the tip of the piezoelectric transducer 17 abuts the island section 23A of the vibrating plate 23. Here, for example, PZT having a longitudinal vibration transverse effect is used for the piezoelectric transducer 17. The piezoelectric transducer 17 contracts upon being charged and expands upon discharging. The piezoelectric transducer 17 is charged with and discharges electricity through a lead line 31.

It is to be noted that the piezoelectric transducer 17 is not limited to the PZT having a longitudinal vibration transverse effect, and may be PZT of a flexural vibration type. In this case, charging brings about extension and discharging brings about shrinkage. In addition, a transducer that expands and contracts in response to an input drive waveform is not limited to the piezoelectric transducer 17. For example, other transducer such as a magnetostrictor may be used.

In the present embodiment, when a waveform of a negative potential is applied to the piezoelectric transducer 17, the piezoelectric transducer 17 contracts and the pressure generation chamber 27 expands to decrease the pressure in the pressure generation chamber 27, causing ink to flow into the pressure generation chamber 27 from the ink chamber 25. In addition, in the present embodiment, when a waveform of a positive potential is applied to the piezoelectric transducer 17, the piezoelectric transducer 17 expands and the pressure generation chamber 27 shrinks to increase the pressure in the pressure generation chamber 27, causing the ink in the pressure generation chamber 27 to be ejected to the outside through the nozzle hole 22A.

### (Details of Drive Waveform)

Next, with reference to Fig. 2, the respective waveforms (drive waveforms) included in the drive signal according to the present embodiment will be described.

Fig. 2 illustrates the respective waveforms included in the drive signal according to the present embodiment. It is possible to generate this drive signal by using, for example, the drive signal generating circuit, which is publicly known technology.

As illustrated in Fig. 2, the drive signal according to the present embodiment at least includes a first waveform and a second waveform. Here, the first waveform is used to oscillate the meniscus, but is not used to eject an ink droplet. In contrast, the second waveform is used to eject an ink droplet.

In this way, the drive signal according to the present embodiment at least includes the first waveform that is an oscillation waveform used to oscillate the meniscus and the second waveform that is an ejection waveform used to eject ink.

The respective waveform elements of the first waveform and the second waveform will be described in detail below.

As illustrated in Fig. 2, the voltage value of the first waveform starts at a reference potential V0 (P11), decreases to a lowermost potential V1 from the reference potential V0 with a predetermined voltage gradient θ12 (P12), and remains the lowermost potential V1 for a predetermined period of time (P13). Next, the voltage value of the first waveform increases to the reference potential V0 again from the lowermost potential V1 with a predetermined voltage gradient θ14 (P14).

Here, the voltage gradient θ14 is set to be greater than the voltage gradient θ12.

The voltage value of the second waveform starts at the reference potential V0 as with the first waveform (P21) and decreases to a lowermost potential V2 with a predetermined voltage gradient θ22 (P22). This lowermost potential V2 of the second waveform is less (lower) than the lowermost potential V1 of the first waveform. The voltage value of the second waveform then remains the lowermost potential V2 for a predetermined period of time (P23), and after that, increases to an uppermost potential V3 with a predetermined voltage gradient θ24 (P24).

Here, the voltage gradient θ24 is set to be greater than the voltage gradient θ22.

The voltage value of the second waveform then remains the uppermost potential V3 for a predetermined period of time (P25), after which it decreases to the reference potential V0 again (P26).

Here, the voltage gradient θ24 is set to be greater than a voltage gradient θ26 in the second waveform.

### (Modification Example of Drive Signal)

A modification example of the drive signal according to the present embodiment will be described below.

In the present embodiment, the drive signal at least including the first waveform and the second waveform has been described. The present invention is not, however, limited to this. In the present embodiment, the drive signal does not have to include, for example, the first waveform as long as the drive signal includes the second waveform. That is, in the present embodiment, as long as the second waveform used to eject ink is included, the oscillation waveform (first waveform) which is not used to eject ink does not have to be included.

In addition, in the present embodiment, the case where the voltage gradient θ14 is set to be greater than the voltage gradient θ2 has been described. The present invention is not, however, limited to this. For example, the voltage gradient θ14 may be set to be less than the voltage gradient θ12. Alternatively, the voltage gradient θ14 may be set to be the same as the voltage gradient θ12.

In addition, in the present embodiment, the case where the voltage gradient θ24 is set to be greater than the voltage gradient θ22 has been described. The present invention is not, however, limited to this. For example, the voltage gradient θ24 may be set to be less than the voltage gradient θ22. Alternatively, the voltage gradient θ24 may be set to be the same as the voltage gradient θ22.

In addition, in the present embodiment, the case where the voltage gradient θ26 is set to be greater than the voltage gradient θ24 has been described. The present invention is not, however, limited to this. For example, the voltage gradient θ26 may be set to be less than the voltage gradient θ24. Alternatively, the voltage gradient θ26 may be set to be the same as the voltage gradient θ24.

A printing cycle may preferably be 1 kHz or more, and more preferably 7 kHz or more. The upper limit of the printing cycle is not particularly limited, but a printing cycle of 50 kHz or less is typical for a versatile print head.

In the present embodiment, the potential difference between the lowermost potential V1 of the first waveform and the reference potential V0 is preferably within a range of 10% or more and 60% or less of the potential difference between the lowermost potential V2 of the second waveform and the reference potential V0, more preferably within a range of 15% or more and 55% or less, and still more preferably within a range of 20% or more and 50% or less.

In the present embodiment, the potential difference between the uppermost potential V3 of the second waveform and the reference potential V0 is preferably within a range of 5% or more and 50% or less of the potential difference between the lowermost potential V2 of the second waveform and the reference potential V0, more preferably within a range of 10% or more and 45% or less, and still more preferably within a range of 15% or more and 40% or less.

### (Ejection State of Ink Droplet)

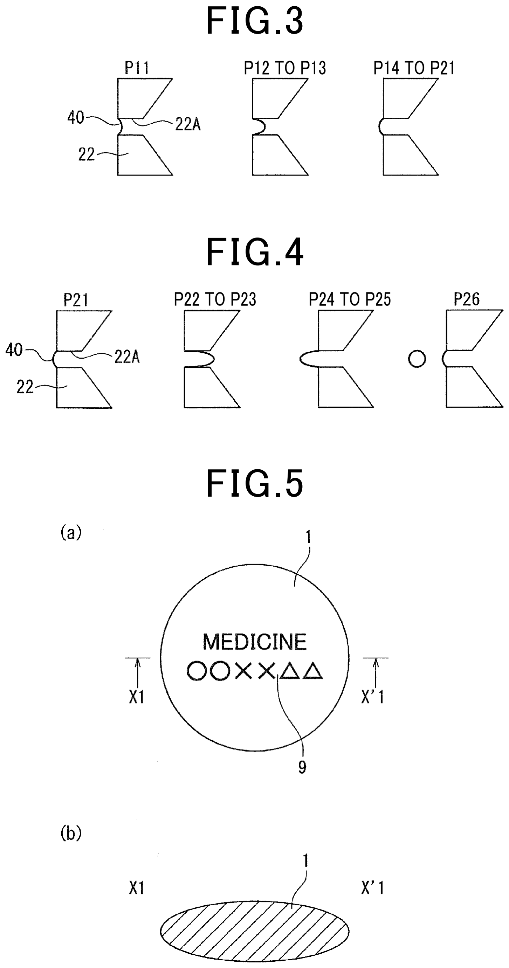

Next, with reference to Figs. 3 and 4, overviews of the ejection states of ink droplets near the nozzle hole 22A by the respective waveforms of the drive signal alone will be described.

First, Fig. 3 is an explanatory diagram illustrating the ejection state of an ink droplet by the first waveform.

In the state at P11 at the reference potential V0, a meniscus 40 is located at a position slightly retracted from the ejection surface of the nozzle hole 22A. Next, in the state at P12 in which a decrease occurs from the reference potential V0 to the lowermost potential V1, the piezoelectric transducer 17 contracts and the pressure generation chamber 27 expands to thereby retract the meniscus 40 into the nozzle hole 22A. At this time, the pressure generation chamber 27 expands at a speed corresponding to the contraction speed of the piezoelectric transducer 17. In the state at P13, the lowermost potential V1 is maintained for such a period of time that the meniscus 40 which was temporarily retracted does not return to the position at which the meniscus 40 was located immediately before being retracted. In the state at P14 in which an increase occurs from the lowermost potential V1 to the reference potential V0, the piezoelectric transducer 17 expands and the pressure generation chamber 27 contracts to thereby return the meniscus 40 which was temporarily retracted to the position at which the meniscus 40 was located immediately before being retracted. At this time, the pressure generation chamber 27 contracts at a speed corresponding to the extension speed of the piezoelectric transducer 17. When the meniscus 40 returns to the position at which the meniscus 40 was located immediately before being retracted, the meniscus 40 does not remain at the position at which the meniscus 40 was located immediately before being retracted because of inertia, and in the state at P21, the meniscus 40 is located at a position slightly projecting from the ejection surface of the nozzle hole 22A.

In this way, the first waveform oscillates the meniscus 40.

Fig. 4 illustrates the fluctuation state of ink observed when the second waveform is applied to the piezoelectric transducer 17 consecutively to the first waveform. In the state at P21 at the reference potential V0, the meniscus 40 is located at a position slightly projecting from the ejection surface of the nozzle hole 22A. Next, when a sharp decrease occurs from the reference potential V0 to the lowermost potential V2, the piezoelectric transducer 17 contracts and the pressure generation chamber 27 expands to thereby retract the meniscus 40 into the nozzle hole 22A. In the state at P23, the lowermost potential V2 is maintained for such a short period of time that the meniscus 40 does not return to the original position.

In the state at P24, a voltage to be applied to the piezoelectric transducer 17 is sharply increased from the lowermost potential V2 to the uppermost potential V3 with the meniscus 40 retracted back into the nozzle hole 22A. This causes the piezoelectric transducer 17 to expand and the pressure generation chamber 27 to contract, and the meniscus 40 begins to project from the ejection surface of the nozzle hole 22A. At this time, the pressure generation chamber 27 contracts at a speed corresponding to the extension speed of the piezoelectric transducer 17. Even in the state at P25 in which the uppermost potential V2 is maintained, the meniscus 40 remains projected outward because of inertia. In the state at P26, the voltage to be applied to the piezoelectric transducer 17 is then decreased to the intermediate potential V0 again with the meniscus 40 remaining projected. This causes the piezoelectric transducer 17 to contract and the pressure generation chamber 27 to expand, tearing off the ink projecting outward from the nozzle hole 22A and ejecting an ink droplet. After the state illustrated as P26, the ink droplet may fly, for example, toward a surface of a print target object (e.g., tablet).

The average speed of ink droplets ejected in this way is not particularly limited, but may preferably be, for example, 3 m/s or more at a location 1 mm apart from the ejection surface of the nozzle hole 22A. In addition, the upper limit of the average speed of ink droplets is not particularly limited, but may preferably be, for example, 10 m/s or less at a location 1 mm apart from the ejection surface of the nozzle hole 22A.

As described above, in the present embodiment, it is more preferred that a drive waveform (drive signal) generated by the drive signal generating circuit and applied to the piezoelectric transducer 17 of the print head 10 is a waveform that decreases from the reference potential V0 to the potential V2 and then increases to the potential V3 higher than the reference potential V0, and returns to the reference potential V0 during ejection of the inkjet ink, and any generation means thereof is acceptable.

In addition, in the present embodiment, it is more preferred that a drive waveform (drive signal) generated by the drive signal generating circuit and applied to the piezoelectric transducer 17 of the print head 10 consecutively include, in chronological order, the first waveform applied while inkjet ink is not being ejected and the second waveform applied while inkjet ink is being ejected, the first waveform being a waveform that decreases from the reference potential V0 to the potential V1 and then returns to the reference potential V0 again, the second waveform being a waveform that decreases from the reference potential V0 to the potential V2 and then increases to the potential V3 higher than the reference potential V0, and returns to the reference potential V0 again, the potential V2 being a potential lower than the potential V1, and any generation means thereof is acceptable.

### [Tablet]

In the present embodiment, the inkjet ink according to the present embodiment is used to print characters or images, for example, on a surface of a tablet by using the printing method described above. A print image obtained by printing characters or images by using the printing method described above may preferably have an optical density (OD value) of, for example, 0.3 or more, more preferably 0.35 or more, and still more preferably 0.4 or more.

The configuration of a tablet including a print image (printed portion) printed with the inkjet ink according to the embodiment will be described below.

The tablet according to the present embodiment may be, for example, a medical tablet. Here, the "medical tablet" includes, for example, a film-coated tablet or the like having a water-soluble surface layer formed on the outermost surface of the tablet in addition to an uncoated tablet (plain tablet), a sugar-coated tablet, an enteric tablet, an orally disintegrating tablet, and the like.

Figs. 5(a) and (b) are a plan view of a first configuration example of the medical tablet according to the present embodiment and a cross-sectional view taken along X1-X'1 of the plan view. The medical tablet illustrated in any of Figs. 5(a) and (b) is an uncoated tablet and has an image 9 printed on a surface of a base material 1. This image 9 may be, for example, any image such as a character, a symbol, or a bar code printed with the inkjet ink described above by the inkjet printing described above.

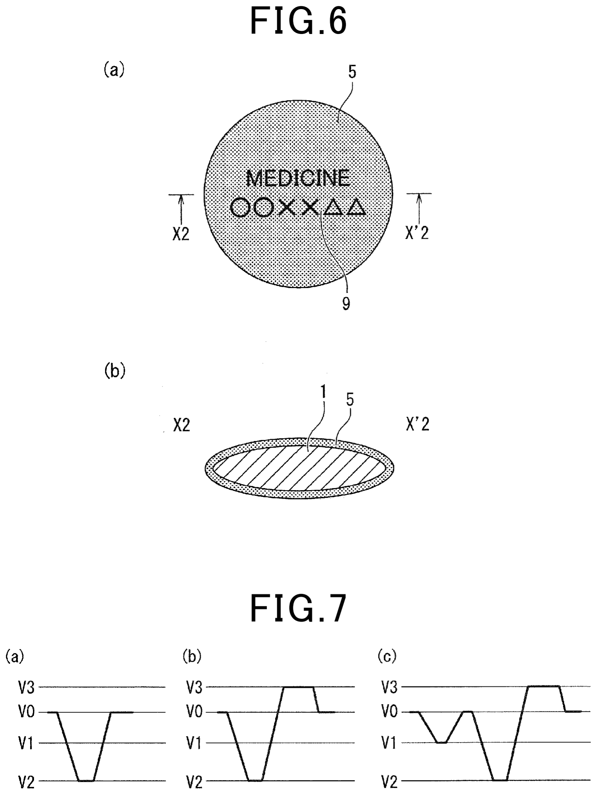

Figs. 6(a) and (b) are a plan view of a second configuration example of the medical tablet according to the present embodiment and a cross-sectional view taken along X2-X'2 of the plan view. The medical tablet illustrated in any of Figs. 6(a) and (b) is a film-coated tablet and has the image 9 printed on a surface of a film 5 that covers the base material 1. The image 9 illustrated in any of Figs. 6(a) and (b) is also printed with the inkjet ink described above by the inkjet printing described above as with the image 9 illustrated in any of Figs. 5(a) and (b).

The active ingredients contained in the medical tablet are not particularly limited. Examples thereof include substances effective for preventing or treating various diseases (e.g., such as substances having a sleep-inducing effect, tranquilizer activity, antibacterial activity, an antihypertensive effect, anti-angina activity, an analgesic effect, anti-inflammatory activity, a tranquilizing effect, diabetic therapeutic activity, a diuretic effect, anticholinergic activity, an anti-hyperacidity effect, an antiepileptic effect, ACE inhibition activity, β-receptor antagonist or agonist activity, an anesthetic effect, an appetite suppression effect, an antiarrhythmic effect, an antidepressant effect, anticoagulant activity, an antidiarrheal effect, antihistamine activity, an antimalarial effect, antitumor activity, immunosuppressive activity, an antiparkinsonian effect, an antipsychotic effect, antiplatelet activity, an antihyperlipidemic effect, and the like), a substance having a scavenging effect, fragrance, a substance having a deodorant effect, and the like, but not limited to these.

It is possible to formulate a carrier that is acceptable from the perspective of the application thereof into the tablet according to the present embodiment as necessary along with an active ingredient. For example, it is possible to formulate, into the medical tablet, a carrier that is acceptable from the pharmaceutical perspective. As the carrier acceptable from the pharmaceutical perspective, various organic or inorganic carrier substances commonly used as pharmaceutical materials are used. For example, an appropriate amount of excipient, lubricant, binder, disintegrant, thickener, and the like are formulated as appropriate. In addition, it is also possible to use an additive such as a preservative, an antioxidant, a coloring agent, or a sweetening agent as necessary.

Although description has been given in the present embodiment by using a medical tablet for the tablet as an example, the present invention is not limited to this. A print target of the inkjet ink according to the present embodiment is not particularly limited. For example, printing may be performed onto a surface of any of various tablets such as animal feed, fertilizer, detergent, and food such as lemonade flavored sweets. Also, the inkjet ink according to the present embodiment is not particularly limited in print target size, and is applicable to tablets of various sizes. In addition, the inkjet ink according to the present embodiment may be used for not only direct printing onto tablet surfaces described above, but also direct printing onto food products and for packaging in direct contact with pharmaceutical products and food products.

In addition, the medical tablet according to the present embodiment is not particularly limited. However, the medical tablet tends to be particularly more effective on a film-coated tablet a surface of which is coated with a film coating layer. This is because the film-coated tablet has fewer voids than those of an uncoated tablet on the surface of the tablet subjected to printing and ink is thus likely to remain on the surface of the tablet. This facilitates the inkjet ink according to the present embodiment to attain a quick-drying effect in comparison with the inkjet ink according to the conventional technology.

In addition, the printing method according to the present embodiment makes it possible to suppress deterioration in the initial ejection performance and in the intermittent resumability of even a quick-drying ink, in comparison with the printing method according to the conventional technology.

### (Effects of Present Embodiment)

(1) The method for printing a print image with inkjet ink according to the present embodiment is a method for printing a print image with inkjet ink by using an inkjet device configured to eject the inkjet ink, the inkjet ink containing alcohol within a range of 30% or more and 60% or less, wherein the inkjet device includes the print head 10 configured to eject the inkjet ink and the drive signal generating circuit configured to generate a drive signal to be applied to the piezoelectric transducer 17 of the print head 10, and the waveform of the drive signal during ejection of the inkjet ink is a waveform that decreases from a reference potential V0 to a potential V2 and then increases to a potential V3 higher than the reference potential V0, and returns to the reference potential V0 again.
   Such a configuration makes it possible to suppress deterioration in the initial ejection performance and in the intermittent resumability, in comparison with the conventional technology even in a case where the added amount of alcohol solvent in the inkjet ink is increased to improve the drying properties.
(2) Further, the method for manufacturing a tablet including a print image printed with inkjet ink according to the present embodiment is a method for manufacturing a tablet including a print image printed with inkjet ink by using an inkjet device configured to eject the inkjet ink, the inkjet ink containing alcohol within a range of 30% or more and 60% or less, wherein the inkjet device includes the print head 10 configured to eject the inkjet ink and the drive signal generating circuit configured to generate a drive signal to be applied to the piezoelectric transducer 17 of the print head 10, and the waveform of the drive signal during ejection of the inkjet ink is a waveform that decreases from a reference potential V0 to a potential V2 and then increases to a potential V3 higher than the reference potential V0, and returns to the reference potential V0 again.
   Such a configuration makes it possible to provide a tablet that suppresses deterioration in the initial ejection performance and in the intermittent resumability, in comparison with the conventional technology even in a case where the added amount of alcohol solvent in the inkjet ink is increased to improve the drying properties.
(3) Further, the inkjet device according to the present embodiment configured to eject inkjet ink is an inkjet device configured to eject inkjet ink, the inkjet ink containing alcohol within a range of 30% or more and 60% or less, wherein the inkjet device includes the print head 10 configured to eject the inkjet ink and the drive signal generating circuit configured to generate a drive signal to be applied to the piezoelectric transducer 17 of the print head 10, and the waveform of the drive signal during ejection of the inkjet ink is a waveform that decreases from a reference potential V0 to a potential V2 and then increases to a potential V3 higher than the reference potential V0, and returns to the reference potential V0 again.
   Such a configuration makes it possible to provide an inkjet device that makes it possible to suppress deterioration in the initial ejection performance and in the intermittent resumability, in comparison with the conventional technology even in a case where the added amount of alcohol solvent in the inkjet ink is increased to improve the drying properties.
(4) Further, the drive signal generating circuit according to the present embodiment that generates a drive signal is a drive signal generating circuit that generates a drive signal to be applied to the piezoelectric transducer 17 of the print head 10 configured to eject inkjet ink, the inkjet ink containing alcohol within a range of 30% or more and 60% or less, wherein the waveform of the drive signal during ejection of the inkjet ink is a waveform that decreases from a reference potential V0 to a potential V2 and then increases to a potential V3 higher than the reference potential V0, and returns to the reference potential V0 again.
   Such a configuration makes it possible to provide a drive signal generating circuit that makes it possible to suppress deterioration in the initial ejection performance and in the intermittent resumability, in comparison with the conventional technology even in a case where the added amount of alcohol solvent in the inkjet ink is increased to improve the drying properties.
(5) Further, the method for printing a print image with inkjet ink according to the present embodiment is a method for printing a print image with inkjet ink by using an inkjet device configured to eject the inkjet ink, the inkjet ink containing alcohol within a range of 30% or more and 60% or less, wherein the inkjet device includes the print head 10 configured to eject the inkjet ink and the drive signal generating circuit configured to generate a drive signal to be applied to the piezoelectric transducer 17 of the print head 10, the waveform of the drive signal consecutively includes a first waveform and a second waveform in chronological order, the first waveform being applied while the inkjet ink is not being ejected, the second waveform being applied while the inkjet ink is being ejected, the first waveform is a waveform that decreases from a reference potential V0 to a potential V1 and then returns to the reference potential V0 again, the second waveform is a waveform that decreases from the reference potential V0 to a potential V2 and then increases to a potential V3 higher than the reference potential V0, and returns to the reference potential V0 again, and the potential V2 is a potential lower than the potential V1.
   Such a configuration makes it possible to suppress deterioration in the initial ejection performance and in the intermittent resumability, in comparison with the conventional technology even in a case where the added amount of alcohol solvent in the inkjet ink is increased to improve the drying properties.
(6) Further, the method for manufacturing a tablet including a print image printed with inkjet ink according to the present embodiment is a method for manufacturing a tablet including a print image printed with inkjet ink by using an inkjet device configured to eject the inkjet ink, the inkjet ink containing alcohol within a range of 30% or more and 60% or less, wherein the inkjet device includes the print head 10 configured to eject the inkjet ink and the drive signal generating circuit configured to generate a drive signal to be applied to the piezoelectric transducer 17 of the print head 10, the waveform of the drive signal consecutively includes a first waveform and a second waveform in chronological order, the first waveform being applied while the inkjet ink is not being ejected, the second waveform being applied while the inkjet ink is being ejected, the first waveform is a waveform that decreases from a reference potential V0 to a potential V1 and then returns to the reference potential V0 again, the second waveform is a waveform that decreases from the reference potential V0 to a potential V2 and then increases to a potential V3 higher than the reference potential V0, and returns to the reference potential V0 again, and the potential V2 is a potential lower than the potential V1.
   Such a configuration makes it possible to provide a tablet that suppresses deterioration in the initial ejection performance and in the intermittent resumability, in comparison with the conventional technology even in a case where the added amount of alcohol solvent in the inkjet ink is increased to improve the drying properties.
(7) Further, the inkjet device according to the present embodiment configured to eject inkjet ink is an inkjet device configured to eject inkjet ink, the inkjet ink containing alcohol within a range of 30% or more and 60% or less, wherein the inkjet device includes the print head 10 configured to eject the inkjet ink and the drive signal generating circuit configured to generate a drive signal to be applied to the piezoelectric transducer 17 of the print head 10, the waveform of the drive signal consecutively includes a first waveform and a second waveform in chronological order, the first waveform being applied while the inkjet ink is not being ejected, the second waveform being applied while the inkjet ink is being ejected, the first waveform is a waveform that decreases from a reference potential V0 to a potential V1 and then returns to the reference potential V0 again, the second waveform is a waveform that decreases from the reference potential V0 to a potential V2 and then increases to a potential V3 higher than the reference potential V0, and returns to the reference potential V0 again, and the potential V2 is a potential lower than the potential V1.
   Such a configuration makes it possible to provide an inkjet device that makes it possible to suppress deterioration in the initial ejection performance and in the intermittent resumability, in comparison with the conventional technology even in a case where the added amount of alcohol solvent in the inkjet ink is increased to improve the drying properties.
(8) Further, the drive signal generating circuit according to the present embodiment that generates a drive signal is a drive signal generating circuit that generates a drive signal to be applied to the piezoelectric transducer 17 of the print head 10 configured to eject inkjet ink, the inkjet ink containing alcohol within a range of 30% or more and 60% or less, wherein the waveform of the drive signal consecutively includes a first waveform and a second waveform in chronological order, the first waveform being applied while the inkjet ink is not being ejected, the second waveform being applied while the inkjet ink is being ejected, the first waveform is a waveform that decreases from a reference potential V0 to a potential V1 and then returns to the reference potential V0 again, the second waveform is a waveform that decreases from the reference potential V0 to a potential V2 and then increases to a potential V3 higher than the reference potential V0, and returns to the reference potential V0 again, and the potential V2 is a potential lower than the potential V1.
   Such a configuration makes it possible to provide a drive signal generating circuit that makes it possible to suppress deterioration in the initial ejection performance and in the intermittent resumability, in comparison with the conventional technology even in a case where the added amount of alcohol solvent in the inkjet ink is increased to improve the drying properties.
(9) Further, the alcohol according to the present embodiment may include at least one of ethanol, NPA, and IPA.
   Such a configuration makes it possible to suppress deterioration in the initial ejection performance and in the intermittent resumability, in comparison with the conventional technology.
(10) Further, the viscosity of the inkjet ink according to the present embodiment at 25°C may be 5.0 mPa·s or less.
   Such a configuration makes it possible to suppress deterioration in the initial ejection performance and in the intermittent resumability, in comparison with the conventional technology.
(11) Further, the surface tension of the inkjet ink according to the present embodiment at 25°C may be within a range of 23 mN/m or more and 34 mN/m or less.
   Such a configuration makes it possible to suppress deterioration in the initial ejection performance and in the intermittent resumability, in comparison with the conventional technology.
(12) Further, the optical density (OD value) of the print image according to the present embodiment may be 0.3 or more.
   Such a configuration makes it possible to obtain a print image having sufficient visual recognizability.
(13) Further, the ejection frequency for the ejection of the inkjet ink according to the present embodiment may be 1 kHz or more.
   Such a configuration makes it possible to increase the printing efficiency.
(14) Further, the average droplet speed during ejection of the inkjet ink according to the present embodiment at an ejection distance of 1 mm from a tip of a nozzle ejecting the inkjet ink may be 3 m/s or more.
   Such a configuration makes it possible to obtain a print image having excellent visual recognizability.
(15) Further, the potential difference according to the present embodiment between the potential V1, which is a peak potential of the first waveform, and the reference potential V0 may be within a range of 10% to 60% of the potential difference between the potential V2, which is a peak potential of the second waveform, and the reference potential V0.
   Such a configuration makes it possible to further suppress deterioration in the initial ejection performance and in the intermittent resumability, in comparison with the conventional technology even in a case where the added amount of alcohol solvent in the inkjet ink is increased to improve the drying properties.

### [Examples]

The present invention will be described in more detail below by using examples, but the present invention is not limited at all by the examples.

### (Manufacture of Inkjet Inks)

A procedure of preparing inkjet inks will be described below.

The inkjet inks each include the respective components of edible colorant, an organic solvent (drying accelerator), water, a humectant, and other additives as necessary. As the preparation order, the water and the organic solvent were first mixed to obtain a mixed solvent. Next, the humectant and the edible colorant were added to the mixed solvent and the other additives were then added. Finally, this mixed solution was placed in a dispersing machine such as a paint shaker, and refined and dispersed for a specified period of time. In this way, the inkjet ink according to any of the present examples was prepared. The various components will be specifically described below.

Food Red No. 2, Food Red No. 3, Food Red No. 102, Food Yellow No. 4, Food Yellow No. 5, Food Green No. 3, Food Blue No. 1, and Food Blue No. 2 were used as edible dyes and carbon was used as edible pigment for the edible colorants.

Ethanol, 1-propanol (NPA), and 2-propanol (IPA) were used as drying solvents (drying accelerators) for the organic solvents.

Purified water (ion-exchanged water) was used for the water included in each of the inks.

Propylene glycol and glycerin were used for the humectants.

Reduced isomaltulose, lactose, sucrose fatty acid ester, trehalose, and cellobiose were used for the additives (binders).

The above components were prepared as 37 different inks with different formulations. The compositions thereof are shown in Tables 1 to 4.

Each of the inks described above was passed through a membrane filter to remove solid foreign matter from the liquid. Specifically, each of the inks was passed once through a membrane filter (cellulose acetate film) having a pore size of 5.0 µm and then passed once through a membrane filter (cellulose acetate film) having a pore size of 0.8 µm to obtain purified ink.

**[Table 1]**

| | | | | Dye | | | | | | | | | |
|---|---|---|---|---|---|---|---|---|---|---|---|---|---|
| | | | | Example 1 | Example 2 | Example 3 | Example 4 | Example 5 | Example 6 | Example 7 | Example 8 | Example 9 | Example 10 |
| | | | | Sample 1 | Sample 2 | Sample 3 | Sample 4 | Sample 5 | Sample 6 | Sample 7 | Sample 8 | Sample 9 | Sample 10 |
| Formulati on | Coloring | Total amount | | 2.5% | 2.5% | 2.5% | 2.5% | 2.5% | 1.5% | 4.5% | 1.0% | 5.0% | 0.5% |
| | | Dye | Red 2 | - | - | - | - | - | - | - | - | - | - |
| | | | Red 3 | - | - | - | - | - | - | - | - | - | - |
| | | | Red 102 | 0.6% | 0.6% | 0.6% | 0.6% | 0.6% | 0.4% | 1.2% | 0.2% | 1.0% | 0.1% |
| | | | Yellow 4 | 1.3% | 1.3% | 1.3% | 1.3% | 1.3% | 0.7% | 2.1% | 0.5% | 2.5% | 0.3% |
| | | | Yellow 5 | - | - | - | - | - | - | - | - | - | - |
| | | | Green 3 | - | - | - | - | - | - | - | - | - | - |
| | | | Blue 1 | 0.6% | 0.6% | 0.6% | 0.6% | 0.6% | 0.4% | 1.2% | 0.3% | 1.5% | 0.1% |
| | | | Blue 2 | - | - | - | - | - | - | - | - | - | - |
| | | Pigme nt | Carbon | - | - | - | - | - | - | - | - | - | - |
| | Purified water | | | 60.4% | 50.4% | 45.4% | 40.4% | 30.4% | 51.5% | 58.0% | 52.0% | 57.5% | 52.5% |
| | Drying accelerator | | Ethanol | 30.0% | 40.0% | 45.0% | 50.0% | 60.0% | 35.0% | 35.0% | 35.0% | 35.0% | 35.0% |
| | | | NPA (1-propanol) | - | - | - | - | - | - | - | - | - | - |
| | | | IPA (2-propanol) | - | - | - | - | - | - | - | - | - | - |
| | Humectant | | Propylene glycol | 0.1% | 0.1% | 0.1% | 0.1% | 0.1% | 10.0% | 0.05% | 10.0% | 0.05% | 10.0% |
| | | | Glycerin | - | - | - | - | - | - | - | - | - | - |
| | Additive | | Sucrose fatty acid ester | - | - | - | - | - | - | - | - | - | - |
| | | | Trehalose | - | - | - | - | - | - | - | - | - | - |
| | | | Cellobiose | - | - | - | - | - | 2.0% | - | 2.0% | - | 2.0% |
| | | | Lactose | - | - | - | - | - | - | 2.5% | - | 2.5% | - |
| | | | Reduced isomaltulose | 7.0% | 7.0% | 7.0% | 7.0% | 7.0% | - | - | - | - | - |
| Waveform | Waveform A | | Initial ejection performance | Good | Poor | Poor | Poor | Poor | Good | Poor | Good | Poor | Good |
| | | | Intermittent resumability | Poor | Poor | Poor | Poor | Poor | Poor | Poor | Poor | Poor | Poor |
| | Waveform B | Initial ejection performance | Good | Good | Good | Good | Good | Good | Good | Good | Good | Good | |
| | | Intermittent resumability | Good | Good | Good | Good | Good | Good | Good | Good | Good | Good | |
| | Waveform C | Initial ejection performance | Excellen t | Excellen t | Excellen t | Excellen t | Good | Excellen t | Excellen t | Excellen t | Excellen t | Excellen t | |
| | | Intermittent resumability | Excellen t | Excellen t | Excellen t | Good | Good | Excellen t | Excellen t | Excellen t | Good | Excellen t | |
| | OD value | | 0.6 | 0.6 | 0.61 | 0.59 | 0.62 | 0.45 | 0.79 | 0.38 | 0.83 | 0.3 | |
| Performance evaluation | Viscosity (mPa·s) | | 2.7 | 3.2 | 3.4 | 3.6 | 4.1 | 3.8 | 3.9 | 3.5 | 4.1 | 3.3 | |
| | Surface tension (mN/m) | | 33 | 30 | 29 | 28 | 27 | 31 | 32 | 31 | 32 | 30 | |

**[Table 2]**

| | | | | Dye | | | | | | | | | |
|---|---|---|---|---|---|---|---|---|---|---|---|---|---|
| | | | | Example 11 | Example 12 | Example 13 | Example 14 | Example 15 | Example 16 | Example 17 | Example 18 | Example 19 | Example 20 |
| | | | | Sample 11 | Sample 12 | Sample 13 | Sample 14 | Sample 15 | Sample 16 | Sample 17 | Sample 18 | Sample 19 | Sample 20 |
| Formulati on | Colorin g | Total amount | | 6.0% | 1.0% | 1.0% | 3.0% | 3.0% | 3.0% | 2.5% | 2.5% | 2.5% | 2.5% |
| | | Dye | Red 2 | - | 0.4% | 0.4% | - | - | - | - | - | - | - |
| | | | Red 3 | - | - | - | 1.6% | 1.6% | 1.6% | 0.5% | 0.5% | 0.5% | 0.5% |
| | | | Red 102 | 1.2% | - | - | - | - | - | 0.2% | 0.2% | 0.2% | 0.2% |
| | | | Yellow 4 | 3.0% | - | - | - | - | - | 1.8% | 1.8% | 1.8% | 1.8% |
| | | | Yellow 5 | - | 0.3% | 0.3% | - | - | - | - | - | - | - |
| | | | Green 3 | - | - | - | 1.3% | 1.3% | 1.3% | - | - | - | - |
| | | | Blue 1 | 1.8% | 0.3% | 0.3% | - | - | - | - | - | - | - |
| | | | Blue 2 | - | - | - | 0.1% | 0.1% | 0.1% | - | - | - | - |
| | | Pigme nt | Carbon | - | - | - | - | - | - | - | - | - | - |
| | Purified water | | | 56.5% | 68.9% | 43.9% | 66.9% | 46.9% | 41.9% | 67.4% | 42.4% | 65.4% | 55.4% |
| | Drying accelerator | | Ethanol | 35.0% | 25.0% | 45.0% | - | - | - | - | - | - | - |
| | | | NPA (1-propanol) | - | 5.0% | 10.0% | 30.0% | 50.0% | 55.0% | 30.0% | 55.0% | 30.0% | 40.0% |
| | | | IPA (2-propanol) | - | - | - | - | - | - | - | - | - | - |
| | Humectant | | Propylene glycol | 0.05% | 0.1% | 0.1% | 0.1% | 0.1% | 0.1% | 0.1% | 0.1% | 0.1% | 0.1% |
| | | | Glycerin | - | - | - | - | - | - | - | - | - | - |
| | Additive | | Sucrose fatty acid ester | - | - | - | - | - | - | - | - | - | - |
| | | | Trehalose | - | - | - | - | - | - | - | - | - | - |
| | | | Cellobiose | - | - | - | - | - | - | - | - | 2.0% | 2.0% |
| | | | Lactose | 2.5% | - | - | - | - | - | - | - | - | - |
| | | | Reduced isomaltulose | - | - | - | - | - | - | - | - | - | - |
| Waveform | Waveform A | | Initial ejection performance | Poor | Good | Poor | Poor | Poor | Poor | Good | Poor | Poor | Poor |
| | | | Intermittent resumability | Poor | Poor | Poor | Poor | Poor | Poor | Poor | Poor | Poor | Poor |
| | Waveform B | Initial ejection performance | Good | Good | Good | Good | Good | Good | Good | Good | Good | Good | |
| | | Intermittent resumability | Good | Good | Good | Good | Good | Good | Good | Good | Good | Good | |
| | Waveform C | Initial ejection performance | Good | Excellen t | Excellen t | Excellen t | Excellen t | Good | Excellen t | Good | Excellent | Excellen t | |
| | | Intermittent resumability | Good | Excellen t | Good | Excellen t | Good | Good | Excellen t | Good | Good | Good | |
| | OD value | | 0.9 | 0.4 | 0.41 | 0.66 | 0.67 | 0.67 | 0.27 | 0.26 | 0.27 | 0.26 | |
| Performance evaluation | Viscosity (mPa·s) | | 4.4 | 2.3 | 3.4 | 3.2 | 4.1 | 4.6 | 3.4 | 4.7 | 5.1 | 5.5 | |
| | Surface tension (mN/m) | | 32 | 33 | 28 | 34 | 29 | 29 | 35 | 30 | 35 | 32 | |

**[Table 3]**

| | | | | Dye | | | | | Pigment | | | | |
|---|---|---|---|---|---|---|---|---|---|---|---|---|---|
| | | | | Example 21 | Example 22 | Example 23 | Example 24 | Example 25 | Example 26 | Example 27 | Example 28 | Example 29 | Example 30 |
| | | | | Sample 21 | Sample 22 | Sample 23 | Sample 24 | Sample 25 | Sample 26 | Sample 27 | Sample 28 | Sample 29 | Sample 30 |
| Formulati on | Colorin g | Total amount | | 3.8% | 3.8% | 3.5% | 3.5% | 3.5% | 2.1% | 2.1% | 2.1% | 2.1% | 2.1% |
| | | Dye | Red 2 | - | - | 1.4% | 1.4% | 1.4% | - | - | - | - | - |
| | | | Red 3 | 0.8% | 0.8% | - | - | - | - | - | - | - | - |
| | | | Red 102 | 0.3% | 0.3% | - | - | - | - | - | - | - | - |
| | | | Yellow 4 | 2.7% | 2.7% | - | - | - | - | - | - | - | - |
| | | | Yellow 5 | - | - | 0.9% | 0.9% | 0.9% | - | - | - | - | - |
| | | | Green 3 | - | - | - | - | - | - | - | - | - | - |
| | | | Blue 1 | - | - | 1.2% | 1.2% | 1.2% | - | - | - | - | - |
| | | | Blue 2 | - | - | - | - | - | - | - | - | - | - |
| | | Pigme nt | Carbon | - | - | - | - | - | 2.1% | 2.1% | 2.1% | 2.1% | 2.1% |
| | Purified water | | | 64.1% | 54.1% | 62.4% | 42.4% | 37.4% | 61.4% | 56.4% | 46.4% | 41.4% | 36.4% |
| | Drying accelerator | | Ethanol | - | - | - | - | - | - | - | - | - | - |
| | | | NPA (1-propanol) | 30.0% | 40.0% | - | - | - | 30.0% | 35.0% | 45.0% | 50.0% | 55.0% |
| | | | IPA (2-propanol) | - | - | 30.0% | 50.0% | 55.0% | - | - | - | - | - |
| | Humectant | | Propylene glycol | 0.1% | 0.1% | 0.1% | 0.1% | 0.1% | 1.5% | 1.5% | 1.5% | 1.5% | 1.5% |
| | | | Glycerin | - | - | - | - | - | 1.5% | 1.5% | 1.5% | 1.5% | 1.5% |
| | Additive | | Sucrose fatty acid ester | - | - | - | - | - | 3.0% | 3.0% | 3.0% | 3.0% | 3.0% |
| | | | Trehalose | - | - | - | - | - | 0.5% | 0.5% | 0.5% | 0.5% | 0.5% |
| | | | Cellobiose | 2.0% | 2.0% | - | - | - | - | - | - | - | - |
| | | | Lactose | - | - | - | - | - | - | - | - | - | - |
| | | | Reduced isomaltulose | - | - | 4.0% | 4.0% | 4.0% | - | - | - | - | - |
| Waveform | Waveform A | | Initial ejection performance | Poor | Poor | Poor | Poor | Poor | Poor | Poor | Poor | Poor | Poor |
| | | | Intermittent resumability | Poor | Poor | Poor | Poor | Poor | Poor | Poor | Poor | Poor | Poor |
| | Waveform B | Initial ejection performance | Good | Good | Good | Good | Good | Good | Good | Good | Good | Good | |
| | | Intermittent resumability | Good | Good | Good | Good | Good | Good | Good | Good | Good | Good | |
| | Waveform C | Initial ejection performance | Excellen t | Excellen t | Excellen t | Excellen t | Good | Excellen t | Excellen t | Excellen t | Excellen t | Good | |
| | | Intermittent resumability | Good | Good | Excellen t | Good | Good | Excellen t | Excellen t | Excellen t | Good | Good | |
| | OD value | | 0.36 | 0.34 | 0.69 | 0.7 | 0.71 | 0.7 | 0.7 | 0.69 | 0.68 | 0.69 | |
| Performance evaluation | Viscosity (mPa·s) | | 5.2 | 5.8 | 3.6 | 4.5 | 5.0 | 3.3 | 3.5 | 4.0 | 4.5 | 5.0 | |
| | Surface tension (mN/m) | | 35 | 32 | 30 | 26 | 25 | 28 | 26 | 24 | 24 | 23 | |

**[Table 4]**

| | | | | Pigment | | | | | Dye | Pigment |
|---|---|---|---|---|---|---|---|---|---|---|
| | | | | Example 31 | Example 32 | Example 33 | Example 34 | Example 35 | Comparativ e example 1 | Comparativ e example 2 |
| | | | | Sample 31 | Sample 32 | Sample 33 | Sample 34 | Sample 35 | Sample 36 | Sample 37 |
| Formulati on | Colori ng | Total amount | | 2.1% | 0.6% | 0.6% | 0.9% | 0.9% | 2.5% | 2.1% |
| | | Dye | Red 2 | - | - | - | - | - | - | - |
| | | | Red 3 | - | - | - | - | - | - | - |
| | | | Red 102 | - | - | - | - | - | 0.6% | - |
| | | | Yellow 4 | - | - | - | - | - | 1.3% | - |
| | | | Yellow 5 | - | - | - | - | - | - | - |
| | | | Green 3 | - | - | - | - | - | - | - |
| | | | Blue 1 | - | - | - | - | - | 0.6% | - |
| | | | Blue 2 | - | - | - | - | - | - | - |
| | | Pigme nt | Carbon | 2.1% | 0.6% | 0.6% | 0.9% | 0.9% | - | 2.1% |
| | Purified water | | | 31.4% | 62.9% | 32.9% | 62.6% | 32.6% | 25.4% | 26.4% |
| | Drying accelerator | | Ethanol | - | - | - | - | - | 65.0% | - |
| | | | NPA (1-propanol) | 60.0% | 30.0% | 60.0% | 30.0% | 60.0% | - | 65.0% |
| | | | IPA (2-propanol) | - | - | - | - | - | - | - |
| | Humectant | | Propylene glycol | 1.5% | 1.5% | 1.5% | 1.5% | 1.5% | 0.1% | 1.5% |
| | | | Glycerin | 1.5% | 1.5% | 1.5% | 1.5% | 1.5% | - | 1.5% |
| | Additive | | Sucrose fatty acid ester | 3.0% | 3.0% | 3.0% | 3.0% | 3.0% | - | 3.0% |
| | | | Trehalose | 0.5% | 0.5% | 0.5% | 0.5% | 0.5% | - | 0.5% |
| | | | Cellobiose | - | - | - | - | - | - | - |
| | | | Lactose | - | - | - | - | - | - | - |
| | | | Reduced isomaltulose | - | - | - | - | - | 7.0% | - |
| Waveform | Waveform A | | Initial ejection performance | Poor | Poor | Poor | Poor | Poor | Poor | Poor |
| | | | Intermittent resumability | Poor | Poor | Poor | Poor | Poor | Poor | Poor |
| | Waveform B | Initial ejection performance | Good | Good | Good | Good | Good | Poor | Poor | |
| | | Intermittent resumability | Good | Good | Good | Good | Good | Poor | Poor | |
| | Waveform C | Initial ejectior performance | Good | Excellent | Good | Excellent | Good | Poor | Poor | |
| | | Intermittent resumability | Good | Excellent | Good | Excellent | Good | Poor | Poor | |
| | OD value | | 0.68 | 0.22 | 0.21 | 0.31 | 0.29 | 0.61 | 0.69 | |
| Performan ce evaluation | Viscosity (mPa·s) | | 5.2 | 3.0 | 5.0 | 3.1 | 5.1 | 4.6 | 5.3 | |
| | Surface tension (mN/m) | | 22 | 29 | 22 | 28 | 22 | 26 | 22 | |

The 37 inkjet inks (Samples 1 to 37) were produced by the preparation method described above. Tables 1 to 4 show the respective components of the 37 inkjet inks (Samples 1 to 37).

Samples 1 to 35 correspond to Examples 1 to 35 and Samples 36 and 37 correspond to Comparative Examples 1 and 2.

### (Types of Drive Waveforms to Be Applied to Piezoelectric Transducer)

The types of drive waveforms (printing methods) to be applied to a piezoelectric transducer will be described below.

### - Waveform A: Comparative examples (waveform according to the conventional technology: basic waveform)

The waveform A is a drive waveform during ejection of inkjet ink, and as illustrated in Fig. 7(a), the waveform A is a waveform that decreases to the potential V2 from the reference potential VO and then returns to the reference potential V0 again.

### - Waveform B: Examples (waveform according to any of the present examples)

The waveform B is a drive waveform during ejection of inkjet ink, and as illustrated in Fig. 7(b), the waveform B is a waveform that decreases to the potential V2 from the reference potential VO and then increases to the potential V3 higher than the reference potential V0, and returns to the reference potential VO again.

### - Waveform C: Examples (waveform according to any of the present examples)

The waveform C is a drive waveform during ejection of inkjet ink, and as illustrated in Fig. 7(c), the waveform C includes the first waveform that decreases to the potential V1 from the reference potential VO and then returns to the reference potential V0 again and the second waveform that decreases to the potential V2 from the reference potential V0 and then increases to the potential V3 higher than the reference potential V0, and returns to the reference potential VO again. Here, the potential V2 is a potential lower than the potential V1.

### (Evaluation Items and Evaluation Criteria)

The initial ejection performance and the intermittent resumability of each of the inkjet inks prepared in the present examples in the case of printing with the respective drive waveforms (printing methods) illustrated in Fig. 7 were each evaluated. Results of the respective evaluations are shown in Tables 1 to 4. The evaluation methods in the present examples are as follows.

### (1) Evaluation of Initial Ejection Performance

As an inkjet head, a drop-on-demand inkjet head driven by piezoelectric ceramic was used that had a print resolution of 600 dpi in a main scanning direction and 600 dpi in a subscanning direction (the conveyance direction of a recording medium such as a tablet) and included 1,280 nozzles in total. Immediately after nozzle maintenance, a test pattern was printed using each of the drive waveforms by using the inkjet head. Then, from the print condition of the test pattern, the readability of the printed characters due to occurrence of non-ejection was examined. The evaluation criteria are as follows.
Excellent: No non-ejection occurred
Good: Readable
Poor: Unreadable

The initial ejection performance evaluated as "Excellent" or "Good" was regarded as a pass since there were no problems in use.

In the case of printing with the waveform A, the initial ejection performances of Samples 1, 6, 8, 10, 12, and 17 were "Good" and the initial ejection performances of Samples 2 to 5, 7, 9, 11, 13 to 16, and 18 to 37 were "Poor".

In addition, in the case of printing with the waveform B, the initial ejection performances of Samples 1 to 35 were "Good" and the initial ejection performances of Samples 36 and 37 were "Poor".

In addition, in the case of printing with the waveform C, the initial ejection performances of Samples 1 to 4, 6 to 10, 12 to 15, 17, 19 to 24, 26 to 29, 32, and 34 were "Excellent", the initial ejection performances of Samples 5, 11, 16, 18, 25, 30, 31, 33, and 35 were "Good", and the initial ejection performances of Samples 36 and 37 were "Poor".

### (2) Evaluation of Intermittent Resumability

As an inkjet head, a drop-on-demand inkjet head driven by piezoelectric ceramic was used that had a print resolution of 600 dpi in a main scanning direction and 600 dpi in a subscanning direction (the conveyance direction of a recording medium such as a tablet) and included 1,280 nozzles in total. After the ink was left in the inkjet head for 30 minutes without flushing, a test pattern was printed with each of the drive waveforms by using the inkjet head. Then, from the print condition of the test pattern, the readability of the printed characters due to occurrence of non-ejection was examined. The evaluation criteria are as follows.
Excellent: No non-ejection occurred
Good: Readable
Poor: Unreadable

The intermittent resumability evaluated as "Excellent" or "Good" was regarded as a pass since there were no problems in use.

In the case of printing with the waveform A, the intermittent resumabilities of Samples 1 to 37 were "Poor".

In addition, in the case of printing with the waveform B, the intermittent resumabilities of Samples 1 to 35 were "Good" and the intermittent resumabilities of Samples 36 and 37 were "Poor".

In addition, in the case of printing with the waveform C, the intermittent resumabilities of Samples 1 to 3, 6 to 8, 10, 12, 14, 17, 23, 26 to 28, 32, and 34 were "Excellent", the intermittent resumabilities of Samples 4, 5, 9, 11, 13, 15, 16, 18 to 22, 24, 25, 29 to 31, 33, and 35 were "Good", and the intermittent resumabilities of Samples 36 and 37 were "Poor".

The results show that it is possible to suppress deterioration in the initial ejection performance and in the intermittent resumability, in comparison with the conventional technology, if a drive waveform to be applied to a piezoelectric transducer of a device configured to eject inkjet ink containing alcohol within a range of 30% or more and 60% or less is a waveform that decreases to the potential V2 from the reference potential VO and then increases to the potential V3 higher than the reference potential V0, and returns to the reference potential V0 again even in a case where the added amount of alcohol solvent in the inkjet ink is increased to improve the drying properties.

### [Reference Signs List]

1 ... Base material
5 ... Film
9 ... Image
10 ... Print head
17 ... Piezoelectric transducer
21 ... Substrate unit
22 ... Nozzle plate
22A ... Nozzle hole
23 ... Vibrating plate
23A ... Island section
24 ... Flow channel formation plate
25 ... Ink chamber
26 ... Ink supply port
27 ... Pressure generation chamber
28 ... Base
29 ... Accommodation chamber
30 ... Fixation substrate
31 ... Lead line
40 ... Meniscus

## Claims

1. An edible inkjet ink printing method comprising
printing a print image with edible inkjet ink by using a device configured to eject the edible inkjet ink, the edible inkjet ink containing alcohol within a range of 30% or more and 60% or less, wherein
the device configured to eject the edible inkjet ink includes
an ink ejection head configured to eject the edible inkjet ink, and
a drive waveform generator configured to generate a drive waveform to be applied to a pressure-generating element of the ink ejection head, and
the drive waveform during ejection of the inkjet ink is a waveform that decreases from a reference potential VO to a potential V2 lower than the reference potential VO and then increases to a potential V3 higher than the reference potential V0, and returns to the reference potential VO again.

2. A method for manufacturing a tablet including a print image printed with edible inkjet ink by using a device configured to eject the edible inkjet ink, the edible inkjet ink containing alcohol within a range of 30% or more and 60% or less, wherein
the device configured to eject the edible inkjet ink includes
an ink ejection head configured to eject the edible inkjet ink, and
a drive waveform generator configured to generate a drive waveform to be applied to a pressure-generating element of the ink ejection head, and
the drive waveform during ejection of the inkjet ink is a waveform that decreases from a reference potential VO to a potential V2 lower than the reference potential VO and then increases to a potential V3 higher than the reference potential V0, and returns to the reference potential VO again.

3. An ejection device configured to eject edible inkjet ink, the edible inkjet ink containing alcohol within a range of 30% or more and 60% or less, the ejection device comprising:
an ink ejection head configured to eject the edible inkjet ink; and
a drive waveform generator configured to generate a drive waveform to be applied to a pressure-generating element of the ink ejection head, wherein
the drive waveform during ejection of the inkjet ink is a waveform that decreases from a reference potential VO to a potential V2 lower than the reference potential VO and then increases to a potential V3 higher than the reference potential V0, and returns to the reference potential VO again.

4. A drive waveform generator configured to generate a drive waveform to be applied to a pressure-generating element of a liquid ejection head configured to eject edible inkjet ink, the edible inkjet ink containing alcohol within a range of 30% or more and 60% or less, wherein
the drive waveform during ejection of the inkjet ink is a waveform that decreases from a reference potential VO to a potential V2 lower than the reference potential VO and then increases to a potential V3 higher than the reference potential V0, and returns to the reference potential VO again.

5. An edible inkjet ink printing method comprising
printing a print image with edible inkjet ink by using a device configured to eject the edible inkjet ink, the edible inkjet ink containing alcohol within a range of 30% or more and 60% or less, wherein
the device configured to eject the edible inkjet ink includes
an ink ejection head configured to eject the edible inkjet ink, and
a drive waveform generator configured to generate a drive waveform to be applied to a pressure-generating element of the ink ejection head,
the drive waveform consecutively includes a first waveform and a second waveform in chronological order, the first waveform being applied while the inkjet ink is not being ejected, the second waveform being applied while the inkjet ink is being ejected,
the first waveform is a waveform that decreases from a reference potential VO to a potential V1 lower than the reference potential VO and then returns to the reference potential VO again,
the second waveform is a waveform that decreases from the reference potential VO to a potential V2 lower than the reference potential VO and then increases to a potential V3 higher than the reference potential V0, and returns to the reference potential VO again, and
the potential V2 is a potential lower than the potential V1.

6. A method for manufacturing a tablet including a print image printed with edible inkjet ink by using a device configured to eject the edible inkjet ink, the edible inkjet ink containing alcohol within a range of 30% or more and 60% or less, wherein
the device configured to eject the edible inkjet ink includes
an ink ejection head configured to eject the edible inkjet ink, and
a drive waveform generator configured to generate a drive waveform to be applied to a pressure-generating element of the ink ejection head,
the drive waveform consecutively includes a first waveform and a second waveform in chronological order, the first waveform being applied while the inkjet ink is not being ejected, the second waveform being applied while the inkjet ink is being ejected,
the first waveform is a waveform that decreases from a reference potential VO to a potential V1 lower than the reference potential VO and then returns to the reference potential VO again,
the second waveform is a waveform that decreases from the reference potential VO to a potential V2 lower than the reference potential VO and then increases to a potential V3 higher than the reference potential V0, and returns to the reference potential VO again, and
the potential V2 is a potential lower than the potential V1.

7. An ejection device configured to eject edible inkjet ink, the edible inkjet ink containing alcohol within a range of 30% or more and 60% or less, the ejection device comprising:
an ink ejection head configured to eject the edible inkjet ink; and
a drive waveform generator configured to generate a drive waveform to be applied to a pressure-generating element of the ink ejection head, wherein
the drive waveform consecutively includes a first waveform and a second waveform in chronological order, the first waveform being applied while the inkjet ink is not being ejected, the second waveform being applied while the inkjet ink is being ejected,
the first waveform is a waveform that decreases from a reference potential VO to a potential V1 lower than the reference potential VO and then returns to the reference potential VO again,
the second waveform is a waveform that decreases from the reference potential VO to a potential V2 lower than the reference potential VO and then increases to a potential V3 higher than the reference potential V0, and returns to the reference potential VO again, and
the potential V2 is a potential lower than the potential V1.

8. A drive waveform generator configured to generate a drive waveform to be applied to a pressure-generating element of a liquid ejection head configured to eject edible inkjet ink, the edible inkjet ink containing alcohol within a range of 30% or more and 60% or less, wherein
the drive waveform consecutively includes a first waveform and a second waveform in chronological order, the first waveform being applied while the inkjet ink is not being ejected, the second waveform being applied while the inkjet ink is being ejected,
the first waveform is a waveform that decreases from a reference potential VO to a potential V1 lower than the reference potential VO and then returns to the reference potential VO again,
the second waveform is a waveform that decreases from the reference potential VO to a potential V2 lower than the reference potential VO and then increases to a potential V3 higher than the reference potential V0, and returns to the reference potential VO again, and
the potential V2 is a potential lower than the potential V1.

9. The edible inkjet ink printing method according to claim 1 or 5, wherein
the alcohol includes at least one of ethanol, NPA, and IPA.

10. The method for manufacturing a tablet according to claim 2 or 6, wherein
the alcohol includes at least one of ethanol, NPA, and IPA.

11. The ejection device configured to eject edible inkjet ink according to claim 3 or 7, wherein
the alcohol includes at least one of ethanol, NPA, and IPA.

12. The drive waveform generator according to claim 4 or 8, wherein
the alcohol includes at least one of ethanol, NPA, and IPA.

13. The edible inkjet ink printing method according to claim 1 or 5, wherein
a viscosity of the ink at 25°C is 5.0 mPa·s or less.

14. The method for manufacturing a tablet according to claim 2 or 6, wherein
a viscosity of the ink at 25°C is 5.0 mPa·s or less.

15. The ejection device configured to eject edible inkjet ink according to claim 3 or 7, wherein
a viscosity of the ink at 25°C is 5.0 mPa·s or less.

16. The drive waveform generator according to claim 4 or 8, wherein
a viscosity of the ink at 25°C is 5.0 mPa·s or less.

17. The edible inkjet ink printing method according to claim 1 or 5, wherein
a surface tension of the ink at 25°C is within a range of 23 mN/m or more and 34 mN/m or less.

18. The method for manufacturing a tablet according to claim 2 or 6, wherein
a surface tension of the ink at 25°C is within a range of 23 mN/m or more and 34 mN/m or less.

19. The ejection device configured to eject edible inkjet ink according to claim 3 or 7, wherein
a surface tension of the ink at 25°C is within a range of 23 mN/m or more and 34 mN/m or less.

20. The drive waveform generator according to claim 4 or 8, wherein
a surface tension of the ink at 25°C is within a range of 23 mN/m or more and 34 mN/m or less.

21. The edible inkjet ink printing method according to claim 1 or 5, wherein
an optical density (OD value) of the print image is 0.3 or more.

22. The method for manufacturing a tablet according to claim 2 or 6, wherein
an optical density (OD value) of the print image is 0.3 or more.

23. The ejection device configured to eject edible inkjet ink according to claim 3 or 7, wherein
an optical density (OD value) of the print image is 0.3 or more.

24. The drive waveform generator according to claim 4 or 8, wherein
an optical density (OD value) of the print image is 0.3 or more.

25. The edible inkjet ink printing method according to claim 1 or 5, wherein
an ejection frequency for ejection of the ink is 1 kHz or more.

26. The method for manufacturing a tablet according to claim 2 or 6, wherein
an ejection frequency for ejection of the ink is 1 kHz or more.

27. The ejection device configured to eject edible inkjet ink according to claim 3 or 7, wherein
an ejection frequency for ejection of the ink is 1 kHz or more.

28. The drive waveform generator according to claim 4 or 8, wherein
an ejection frequency for ejection of the ink is 1 kHz or more.

29. The edible inkjet ink printing method according to claim 1 or 5, wherein
an average droplet speed during ejection of the ink at an ejection distance of 1 mm from a tip of a nozzle ejecting the ink is 3 m/s or more .

30. The method for manufacturing a tablet according to claim 2 or 6, wherein
an average droplet speed during ejection of the ink at an ejection distance of 1 mm from a tip of a nozzle ejecting the ink is 3 m/s or more.

31. The ejection device configured to eject edible inkjet ink according to claim 3 or 7, wherein
an average droplet speed during ejection of the ink at an ejection distance of 1 mm from a tip of a nozzle ejecting the ink is 3 m/s or more.

32. The drive waveform generator according to claim 4 or 8, wherein
an average droplet speed during ejection of the ink at an ejection distance of 1 mm from a tip of a nozzle ejecting the ink is 3 m/s or more.

33. The edible inkjet ink printing method according to claim 5, wherein
a potential difference between the potential V1, which is a peak potential of the first waveform, and the reference potential V0 is within a range of 10% to 60% of a potential difference between the potential V2, which is a peak potential of the second waveform, and the reference potential VO.

34. The method for manufacturing a tablet according to claim 6, wherein
a potential difference between the potential V1, which is a peak potential of the first waveform, and the reference potential V0 is within a range of 10% to 60% of a potential difference between the potential V2, which is a peak potential of the second waveform, and the reference potential VO.

35. The ejection device configured to eject edible inkjet ink according to claim 7, wherein
a potential difference between the potential V1, which is a peak potential of the first waveform, and the reference potential V0 is within a range of 10% to 60% of a potential difference between the potential V2, which is a peak potential of the second waveform, and the reference potential VO.

36. The drive waveform generator according to claim 8, wherein
a potential difference between the potential V1, which is a peak potential of the first waveform, and the reference potential V0 is within a range of 10% to 60% of a potential difference between the potential V2, which is a peak potential of the second waveform, and the reference potential VO.
